Europäisches Patentamt

European Patent Office

Office européen des brevets

(11) Veröffentlichungsnummer: **0 026 870**
**A2**

(12) **EUROPÄISCHE PATENTANMELDUNG**

(21) Anmeldenummer: 80105693.8

(22) Anmeldetag: 22.09.80

(51) Int. Cl.³: **H 02 M 3/315**, H 02 M 1/06

(30) Priorität: 05.10.79 DE 2940498

(43) Veröffentlichungstag der Anmeldung: 15.04.81
Patentblatt 81/15

(84) Benannte Vertragsstaaten: AT CH DE FR GB LI SE

(71) Anmelder: SIEMENS AKTIENGESELLSCHAFT Berlin
und München, Postfach 22 02 61,
D-8000 München 22 (DE)

(72) Erfinder: Heinicke, Haraid,
Friedrich-Bauer-Strasse 14/IV, D-8520 Eriangen (DE)

(54) **Eintakt-Gleichspannungswandler zur Impulssteuerung der Spannung an einer kapazitiven Last.**

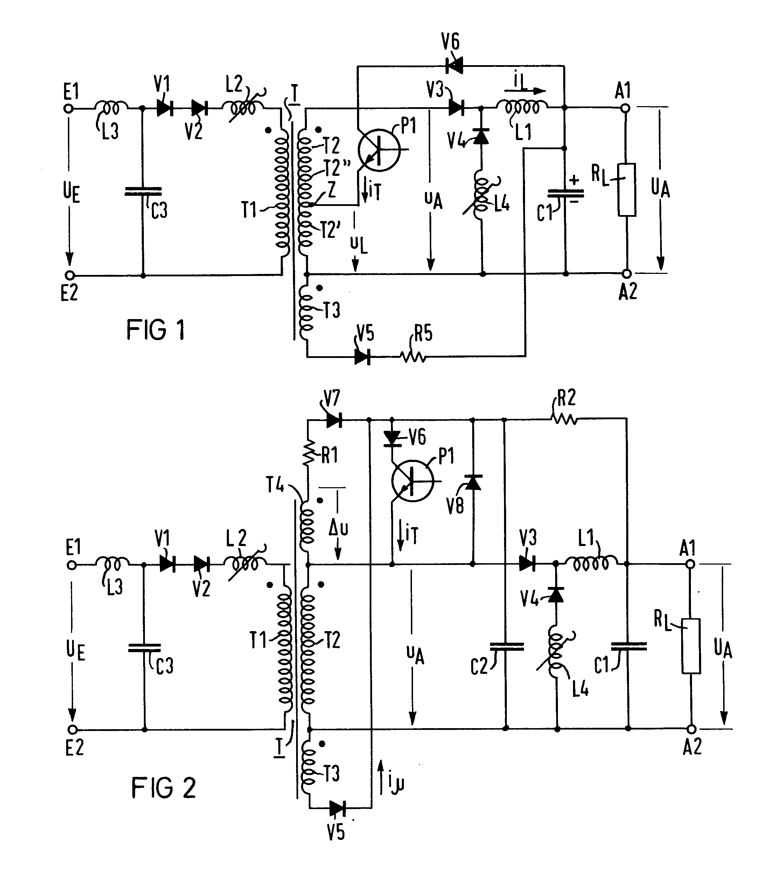

(57) Der Eintakt-Gleichspannungswandler benutzt einen Kondensator (C1) im Sekundärkreis (T2) eines Impulstransformators (T) als Energiespeicher für einen die Thyristoren (V1, V2) im Primärkreis (T1) löschenden Impulsstrom ($i_T$), der über Leistungstransistoren (P1) auf Teile der Sekundärwicklungsanordnung (T2') gelangt. Der Entmagnetisierungsstrom ($i_\mu$) des Impulstransformators (T) wird dem Kondensator (C1) von einer zweiten Sekundärwicklung (T3) zugeführt (Fig. 1).

0026870

SIEMENS AKTIENGESELLSCHAFT      Unser Zeichen
Berlin und München             VPA 78 P 3197 EUR

Eintakt-Gleichspannungswandler zur Impulssteuerung der
Spannung an einer kapazitiven Last

Die Erfindung betrifft einen Eintakt-Gleichspannungswandler
nach dem Oberbegriff des Patentanspruchs 1.

Bei bekannten Eintakt-Gleichspannungswandlern dieser Art
werden die hochsperrenden Thyristoren im Primärkreis des
Impulstransformators mit hochsperrenden Lösch- bzw.
Umschwingthyristoren in Verbindung mit Löschkondensatoren
und Umschwingdrosseln gelöscht und die Entmagnetisierungsenergie des Impulstransformators entweder in Widerständen
vernichtet oder als gepulster Strom einer Batterie als
Verbraucher zugeführt. Diese Art der Thyristorlöschung
vermindert den Wirkungsgrad, da auch im Schwachlastbetrieb
des Eintakt-Gleichspannungswandlers bis zu 3 % der jeweils
gewünschten Nenn-Durchgangsleistung für die Löschung verbraucht wird.

Der Erfindung liegt die Aufgabe zugrunde, den Wirkungsgrad
durch eine verlustarme Löscheinrichtung im niedergespannten Sekundärkreis des Impulstransformators zu verbessern

Fi 2 Bim / 4.10.1979

und unter Fortfall gesonderter Lösch- und Umschwingthyristoren samt Löschkondensatoren und Umschwingdrosseln eine sichere Löschung der im Primärkreis angeordneten Thyristoren mit optimal geringer Löschenergie zu ermöglichen.

Die Lösung der gestellten Aufgabe gelingt durch die kennzeichnenden Maßnahmen nach dem Patentanspruch 1.

Vorteilhafte Weiterbildungen der Erfindung sind Gegenstand weiterer Unteransprüche.

Einige Ausführungsbeispiele der Erfindung sind in der Zeichnung vereinfacht dargestellt und nachfolgend näher erläutert.

Die den Transformatorwicklungen zugeordneten Punkte bedeuten die Austrittsstellen des Kraftflusses und besagen in den vorliegenden Fällen, daß alle Wicklungen gleichen Wickelsinn aufweisen.

Fig. 1 zeigt einen Eintakt-Gleichspannungswandler mit einem als Energiespeicher für den Impulsstrom mitbenutzten Glättungskondensator und

Fig. 2 einen Eintakt-Gleichspannungswandler mit gesondertem Kondensator für den Impulsstrom.

In der Schaltung nach Fig. 1 ist die (hohe) Eingangsspannung $U_E$ an die Eingangsklemmen E1, E2 des Eintakt-Gleichspannungswandlers angelegt. Mit den Eingangsklemmen sind in Reihenschaltung eine Glättungsdrossel L3 und ein Glättungskondensator C3 verbunden und an den Glättungskondensator C3 ist die Reihenschaltung zweier Thyristoren V1, V2 mit einer Stufendrossel L2 und der Primärwicklung T1 eines Impulstransformators T angeschlossen. Die erste Sekundärwicklung T2 des Impulstransformators T ist einerseits über ein ungesteuertes Ventil V3 und eine Glättungsdrossel L1 mit der Ausgangsklemme A1 bzw. andererseits direkt mit der Ausgangsklemme A2 verbunden. An den Ausgangsklemmen liegt eine Last $R_L$, und zwar an der Ausgangsspannung $U_A$. Parallel zur Last $R_L$ ist ein Glättungskondensator C1 geschaltet, der von der Sekundärwicklung T2 aufgeladen wird. Zwischen dem Ventil V3 und der Glättungsdrossel L1 ist die Reihenschaltung eines Freilaufventils V4 mit einer Stufendrossel L4 angeschlossen, wobei letztere unmittelbar mit der Ausgangsklemme A2 sowie dem mit einer zweiten Sekundärwicklung T3 verbundenen Ende der ersten Sekundärwicklung T2 in leitender Verbindung steht. Das andere Ende der Sekundärwicklung T3 ist über ein Ventil V5 und einen Begrenzungswiderstand R5 für den Magnetisierungsstrom $i_\mu$ des Impulstransformators T mit der Verbindungsleitung zwischen Glättungsdrossel L1 und Glättungskondensator C1 verbunden, welcher Anschlußpunkt außerdem über eine Sperrdiode V6 und eine aus mehreren parallelgeschalteten Leistungstransistoren bestehende Transistorbank P1 mit einer Anzapfung Z der Sekundärwicklung T2 verbunden ist. Damit lädt im taktenden Betrieb die Sekundärwicklung T3 den Glättungskondensator C1 mit dem sekundären Magnetisierungsstrom auf. Die Anzapfung Z ist etwa bei einem Drittel der Gesamtwicklungszahl der Sekundärwicklung T2 vorgesehen, so daß über die Sperrdiode V6 und die Transistorbank P1 vom Glättungskondensator C1 ein die Thyristoren V1, V2 löschender Impulsstrom $i_T$ auf den Teil T2' der Sekundärwicklung zum Löschzeitpunkt der Thyristoren V1, V2 zugeführt wird, der etwa dem dreifachen Laststrom im Primärkreis des Impulstransformators T entspricht. Während der Dauer des Impulsstromes $i_T$ kommutiert der Laststrom im Primärkreis des Impulstransformators T von den Thyristoren V1, V2 ab und diese Thyristoren erhalten eine sie löschende negative Anoden-Kathodenspannung.

Mit der Beendigung des Impulsstromes $i_T$ kommutiert der vorher über das Ventil V3 fließende Laststrom im Sekundär-

0026870

kreis des Impulstransformators auf die Reihenschaltung der Stufendrossel L4 mit dem Freilaufventil V4. Nach erfolgtem Abbau des Magnetisierungsstromes $i_\mu$ über das Ventil V5 und den Begrenzungswiderstand R5 auf den Glättungskondensator C1 ist der Eintakt-Gleichspannungswandler über seine Thyristoren V1, V2 sofort wieder einschaltbereit.

Zur Minderung des notwendigen, über die Transistorbank P1 fließenden Impulsstromes $i_T$ ist der sekundärseitig abgewandelte Eintakt-Gleichstromwandler nach Fig. 2 besonders vorteilhaft, da es hiermit gelingt, mit dem über die Glättungsdrossel L1 im Sekundärkreis fließenden Strom $i_L$ zuzüglich des sekundären Magnetisierungsstromes $i_\mu$ auszukommen. Hierzu ist von der Verbindung der Glättungsdrossel L1 mit dem Glättungskondensator C1 und der Ausgangsklemme A1 ausgehend über einen zusätzlichen spannungsbegrenzenden Widerstand R2, die Sperrdiode V6 und die Transistorbank P1 ein Anschluß an das Ende der ersten Sekundärwicklung T2 des Impulstransformators T vorgesehen, welches Ende über eine dritte Sekundärwicklung T4, einen weiteren Widerstand R1 und ein zusätzliches Ventil V7 mit der Verbindungsleitung des spannungsbegrenzenden Widerstandes R2 zur Sperrdiode V6 verbunden ist. Das andere Ende der ersten Sekundärwicklung T2 ist über die zweite Sekundärwicklung T3 und das Ventil V5 an die Leitung zwischen dem Ventil V7 und der Sperrdiode V6 angeschlossen. Außerdem ist noch ein zusätzlicher Impulsstromspeicherkondensator C2 einerseits direkt an die Ausgangsklemme A2 und andererseits an die Verbindungsleitung zwischen Sperrdiode und den Widerstand R2 gelegt.

Die Thyristoren V1, V2 werden wie im erstgenannten Beispiel ebenfalls mit einem Impulsstrom von der Größe des sekundären Laststromes gelöscht, wobei der löschende Impulsstrom $i_T$ dem Impulsstromspeicherkondensator C2 entnommen wird, der beim ersten Einschalten des Gleichstromwandlers auf den etwa 1,1fachen Wert der Spannung $u_A$ über den Widerstand R1 und das Ventil V7 von den Sekundärwicklungen T2 und T4 aufgeladen wird. Über das Ventil V8, das die Reihenschaltung aus Transistorbank P1 und Sperrdiode V6 in Gegenrichtung überbrückt, erfolgt eine schnelle Vorladung des Impulsstromspeicherkondensators C2. Im taktenden Normalbetrieb wird der sekundäre Magnetisierungsstrom $i_{/u}$ zum Nachladen des Impulsstromspeicherkondensators C2 benutzt. Zur Vermeidung eines unerwünscht starken Überladens des Impulsstromspeicherkondensators C2 bei kleinen sekundärseitigen Ausgangsströmen ist der vorerwähnte Widerstand R2 vorgesehen.

Eine vorteilhafte Ausbildung der letztgenannten Art kann bei einer Ausgangsleistung $P_A$ von 3 bis 10 kW und einer Ausgangsspannung $U_A$ = 117 V sowie einer minimalen Sekundärspannung $\hat{U}_A$ = 238 V an der Sekundärwicklung T2 einen Laststrom $i_L$ von 30 bis 100 A im Sekundärkreis erzeugen, wobei der Magnetisierungsstrom $i_{/u}$ zwischen 1,8 und 6 A beträgt. Hierzu sind die Größen des Glättungskondensators

$$C2 = \frac{i_L \cdot t_s}{\Delta u}$$ zwischen 40 und 125 $\mu F$, des Widerstandes

$R_1 = 0,1 \, T_{min}/C2$ zwischen 8 und 1,6 $\Omega$ sowie des Widerstandes R2 = 10 $T_{max}/C2$ zwischen 3,3 und 1,04 $\Omega$ gewählt.

Darin bedeuten

$t_s$ die Schonzeit (30 $\mu s$)

$\Delta u$ die Überladung ($\Delta u = 0,1 \, \hat{U}_{Amin}$)

$T_{max} = 12,5$ ms

  Periodendauer

$T_{min} = 2$ ms

$d = \dfrac{t_s}{0,5 \, t_{rück}}$   Tastverhältnis

$t_{rück} = 1$ ms   Entmagnetisierungszeit

$\hat{i}_{/u} = \hat{i}_L \dfrac{d}{1 + d}$

Bei einer Eingangsspannung $U_E$ = 600 V sind die Windungszahlverhältnisse dabei mit

T1:T2:T3:T4 = 1.75/1/1/0,1 und bei

$U_E$ = 750 V zu 2,2/1/1/0,1 gewählt.

Patentansprüche

1. Eintakt-Gleichspannungswandler zur Impulssteuerung der Spannung an einer im Sekundärkreis seines Impulstransformators angeschlossenen kapazitiven Last durch hochsperrende Thyristoren im Primärkreis des Impulstransformators, der eine den Thyristoren zugeordnete Löscheinrichtung, einen Strompfad für den sekundärseitigen Entmagnetisierungsstrom und einen der Last zugeord- neten Freilaufpfad aufweist, d a d u r c h   g e - k e n n z e i c h n e t , daß an den Sekundärkreis (T2; T2 und T4) des Impulstransformators (T) mindestens ein Kondensator (C1; C2) über Ventile (V3; V7) aufladend angeschlossen und in Entladerichtung über eine Sperrdiode (V6) und eine Transistorbank (P1) mit einem einen Impulsstrom ($i_T$) liefernden kleineren Teil (T2'; T2) des Sekundärkreises verbunden ist und daß ein anderer Teil (T3) des Sekundärkreises über ein Ventil (V5) zum Abbau des Entmagnetisierungsstromes ($i/u$) mit dem Kondensator (C1; C2) verbunden ist.

2. Wandler nach Anspruch 1, d a d u r c h   g e k e n n - z e i c h n e t , daß ein Teil (T2') einer mit der Last ($R_L$) verbundenen ersten Sekundärwicklung (T2) des Impulstransformators (T) über die Transistorbank (P1) und die Sperrdiode (V6) an einen parallel zur Last ($R_L$) geschalteten Glättungskondensator (C1) angeschlossen ist, der über ein Ventil (V3) und eine Glättungsdrossel (L1) im Ladesinne mit der ersten Sekundärwicklung (T2) verbunden ist (Fig. 1)

3. Wandler nach Anspruch 1, d a d u r c h   g e k e n n - z e i c h n e t , daß ein zusätzlicher Impulsspeicher- kondensator (C2) über ein Ventil (V7) und einen Widerstand (R1) an die Reihenschaltung einer die Last ($R_L$) speisenden ersten Sekundärwicklung (T2) mit einer gleichwirkenden dritten Sekundärwicklung (T4) im Ladesinn ange-

0026870

schlossen ist und antiparallel zur Reihenschaltung der dritten Sekundärwicklung (T4) mit dem Widerstand (R1) und dem Ventil (V7) die Reihenschaltung der Sperrdiode (V6) mit der Transistorbank (P1) liegt und außerdem der Impulsspeicherkondensator (C2) über ein Ventil (V8) im Ladesinn an die erste Sekundärwicklung (T2) angeschlossen ist und daß eine unmittelbar mit der ersten Sekundärwicklung (T2) und dem einen Pol des Impulsspeicherkondensators (C2) verbundene gleichwirkende zweite Sekundärwicklung (T3) über ein Ventil (V5) mit dem anderen Pol des Impulsspeicherkondensators im Ladesinn verbunden ist.

4. Wandler nach Anspruch 3, d a d u r c h   g e k e n n -z e i c h n e t , daß der an die Ventile (V7, V8) und die Sperrdiode (V6) angeschlossene Pol des Impulsspeicherkondensators (C2) über einen spannungsbegrenzenden Widerstand (R2) mit dem Glättungskondensator (C1) im sekundären Lastkreis verbunden ist.

0026870

1/1          79 P 3197

FIG 1

FIG 2